Europäisches Patentamt

European Patent Office

Office européen des brevets

(11) Publication number: **0 153 809**
**B1**

# EUROPEAN PATENT SPECIFICATION

(45) Date of publication of patent specification: **10.08.88**

(51) Int. Cl.⁴: **D 01 F 6/18, C 08 F 20/44**

(21) Application number: **85300485.1**

(22) Date of filing: **24.01.85**

(54) A process for preparing acrylonitrile-based filaments for carbon fibres free of agglutination.

(30) Priority: **10.02.84 JP 21995/84**

(43) Date of publication of application:
**04.09.85 Bulletin 85/36**

(45) Publication of the grant of the patent:
**10.08.88 Bulletin 88/32**

(84) Designated Contracting States:
**DE FR GB IT SE**

(56) References cited:
**DE-B-1 191 965**
**FR-A-1 386 267**
**GB-A- 841 732**

(73) Proprietor: **NIKKISO CO., LTD.**
**No. 43-2, Ebisu 3-chome**
**Shibuya-ku Tokyo (JP)**

(72) Inventor: **Imai, Koichi c/o Nikkiso Co. Ltd.**
**3-43-2, Ebisu**
**Shibuya-ku Tokyo (JP)**
Inventor: **Sumoto, Misao c/o Nikkiso Co. Ltd.**
**3-43-2, Ebisu**
**Shibuya-ku Tokyo (JP)**
Inventor: **Nakamura, Hiroyuki c/o Nikkiso Co. Ltd.**
**3-43-2, Ebisu**
**Shibuya-ku Tokyo (JP)**
Inventor: **Miyahara, Naomasa c/o Nikkiso Co. Ltd.**
**3-43-2, Ebisu**
**Shibuya-ku Tokyo (JP)**

(74) Representative: **Atkinson, Peter Birch et al**
**Marks & Clerk Scottish Life House Bridge Street**
**Manchester M3 3DP (GB)**

Courier Press, Leamington Spa, England.

## Description

This invention relates to a process for preparing acrylonitrile-based filaments for carbon fibers free of agglutination, especially in which an acrylonitrile-based polymer is obtained from a medium containing a zinc chloride aqueous solution and hydrogen chloride, and in which filaments resulting therefrom are subjected to a stabilization step (or flame-proofing treatment) to form carbon fibers free of agglutination but having very high strength.

It is known from GB—A—841732 to polymerise acrylonitrile in zinc chloride solutions acidified with HCl. The resultant polymer may be used to produce acrylonitrile filaments which are not subject to discolouration.

In the description hereinafter mentioned, the term "agglutination" means that the filaments formed are coalesced with each other and in extreme cases all filaments in a tow or bundle are completely coalesced. If the agglutination is severe, bending of the tow for forming a loop results in edged or square looping of the tow and in case the agglutination is slight and the tow is readily bendable, some of the filaments are partially coalesced with each other to prevent complete disconnection therebetween. The agglutination is often found in a spinning procedure, hot roller surfaces and/or the stabilization procedure.

Heretofore, as continuous carbon fibers of high strength there have been practically obtained only acrylonitrile-based filments. The carbon fibers of high strength or graphite fibers of high elastic modulus have been increasingly utilized as a reinforcement material for light weight plastics in order to provide mouldings of higher strength and elastic modulus than metals, and also employed for reinforcing the metals.

There has now been demand for the carbon fibers having much higher strength in order to improve quality of reinforced carbon fiber products and to decrease content of the carbon fibers for cost reduction.

In general, a process for preparing the carbon fibers from the acrylonitrile-based filaments comprises a stabilization step (or flame-proofing treatment) of heating the filaments at 200—300°C in the air and a carbonization step of heating the stabilized filaments at 800—1500°C in the non-oxidative atmosphere to form the carbon fibers. It has been known in the stabilization step, that cyclization and oxidation of molecules may occur in the filaments, that these reactions are exo-thermic, and that such step may cause agglutination between the filaments in a bundle, depending on the conditions, to decrease the strength of the carbon fibers. Such decrease may occur probably due to the fact that the agglutination of the filaments prevents the heat of reaction from being dissipated, thereby to excessively raise the temperature within the filaments or the bundle. Thus, the absence of the agglutination has become critical factor for obtaining the carbon fibers of high strength. In order to eliminate such agglutination there have been known several methods of, for example, rubbing the filaments with an edge or crumping the same during the stabilization step. Once occurred, however, the agglutination cannot be expected to be completely eliminated. Thus, prevention of the agglutination has been important. As means for preventing the agglutination there have been known a physical and a chemical treating methods, such as a method of bending acrylonitrile-based filament bundles under tension (Japanese Opened Patent Application 32735/78) and a method of treating acrylonitrile-based filament bundles under tension in a hot water bath of 30—100°C (Japanese Patent Publication 50009/81) for the physical treatment, as well as a method of treating the acrylonitrile-based filament bundles in a stabilizing or carbonizing furnace after depositing long chain silicone oil for the chemical treatment. However, the strength of the carbon fibers obtained by these methods or a combination thereof has been limited to the order of $343\times10^7$Pa (350 kg/mm$^2$). The inventors have investigated processes for preparing the carbon fibers of very high strength of more than $392\times10^7$Pa (400 Kg/mm$^2$), preferably over $490\times10^7$Pa (500 kg/mm$^2$) in a commercially convenient and efficient manner to find out that the carbon fibers may be advantageously produced from the acrylonitrile-based filaments which have been obtained by homopolymerizing acrylonitrile or copolymerizing acrylonitrile with other vinyl monomers in a solvent of a zinc chloride aqueous solution to form a polymeric solution which is then subjected to spinning step. The zinc chloride aqueous solution is a good solvent for the acrylonitrile polymers, in which acrylonitrile may be readily polymerized to form polymers having less branched chains due to a low chain-transfer constant of acrylonitrile. Thus, even a high concentration of the solution may be superior in spinnability for the polymers of high polymerization degree. Depending on the conditions, it is possible to obtain a rate of drawing the filaments from the coagulating bath three times higher than a linear velocity in a nozzle opening (namely, a nozzle draft is larger than 3). When the nozzle draft is high, the filaments of small diameter may be formed with less orientation of polymer molecules within the filament (thus without increase of filament breakage) which is desirable for decreasing difference of the stabilization degrees between a surface layer and a core of each filament in the stabilization step. In this case, however, a problem of agglutination may occur in the stabilization step, resulting in carbon fibers of very poor strength. Therefore, the inventors have extensively investigated the effect of agglutination with enormous experiments to find out that a concentration of hydrogen chloride in the zinc chloride aqueous solution has great influence on the occurrence of agglutination and that a defined low content of hydrogen chloride may prevent the agglutination, resulting in excellent carbon fibers of extremely high strength.

The reason is not clear why the defined low content of hydrogen chloride has the significant effect. It has been found out physically, however, that the presence of hydrogen chloride in the zinc chloride aqueous solution may significantly decrease amide group in the filament, compared with the case of using no hydrogen chloride, as evidenced by an infrared absorption spectrum at 1685 cm$^{-1}$ for the amide group. The low amide content is considered to have relation with basic salts in the zinc chloride aqueous solution. Namely, the presence of hydrogen chloride may shift an equilibrium toward decrease of the basic salts with preventing hydrolysis of a nitrile group. However, a stoichiometric amount of hydrogen chloride equivalent to that of the basic salts may not prevent the agglutination completely and hence more than equivalent amount of hydrogen chloride is required. In view of previous reports in which the nitrile group was deliberately hydrolyzed to form the amide group in order to obtain the carbon fibers of high strength, the fact that the extremely low content of the amide group may produce the carbon fibers of extremely high strength is a surprising and unexpected finding of the invention.

Accordingly, a general object of the invention is to provide carbon fibers having high quality, especially high strength.

According to the present invention there is provided a process for preparing acrylonitrile-based filaments for carbon fibers free of agglutination, which comprises homopolymerizing acrylonitrile or copolymerizing acrylonitrile with other vinyl monomers in an aqueous zinc chloride solution to form a polymeric solution which in turn is spun in a coagulating bath to form the filaments, characterised in that the aqueous solution has a concentration of more than 50% and up to 70% by weight of zinc chloride and contains 0.01 to 5% by weight of hydrogen chloride and in that the filaments are obtained by spinning the polymeric solution in a coagulating bath of a dilute zinc chloride aqueous solution, rinsing the filaments in water and treating the filaments with hot water having a temperature of 60—100°C.

In accordance with the invention, a monomer for polymerization may be acrylonitrile alone but more than 85%, preferably more than 90% of acrylonitrile is suitably used in combination with comonomers, or other vinyl compounds in order to improve spinnability. Examples of the comonomers include methacrylonitrile, acrylic acid, methacrylic acid, itaconic acid, crotonic acid, methyl acrylate, methyl methacrylate, p-styrene sulfonic acid, and p-styrene sulfonic acid esters.

The concentration of the zinc chloride aqueous solvent in the solution is more than 50% and up to 70 wt.% (preferably more than 55 wt.%). A lower concentration may decrease an ability of dissolving the polymer, resulting in turbidity depending on the polymeric composition. On the contrary, a higher concentration may increase a viscosity of the solution, resulting in high susceptibility to solidification at a low temperature. For this reason, the upper limit of the concentration is 70 wt.%.

Zinc chloride used in the solution is preferably of high purity. Even the commercially highest grade of zinc chloride contains about 1 wt.% of basic salts as impurities. The content of the basic salts may be determined by a method according to JIS-K-1428. In the process according to the invention, more than stoichiometric amount of hydrogen chloride equivalent to that of the basic salts should be added. In this case, it is necessary to calculate a quantity of water contained in hydrochloric acid and/or formed by reaction of the basic salt with hydrochloric acid in order to establish the defined concentration of the zinc chloride aqueous solution. Similarly, a quantity of water formed by reaction with the basic salts must be calculated also when gaseous hydrogen chloride is used.

The concentration of hydrogen chloride, excluding an amount for neutralizing the basic salts, is more than 0.01% by weight, below which the agglutination may occur. On the other hand, the upper limit is 5% by weight, above which the agglutination cannot be reduced and corrosion of the apparatus or damage of worker's skin may occur.

Polymerization should be carried out in a medium of said aqueous ZnCl$_2$ solution containing the defined amount of hydrogen chloride. Any initiator for polymerization may be used, which is soluble in the medium. In place of the initiator, the polymerization may be thermally initiated or photo-initiated. There may be also used materials for providing radicals by heat or ray, such as azo-compounds (for example, α,α'-azo-bis-butyronitrile), organic peroxides (for example, benzoyl peroxide and cumene hydro-peroxide), inorganic peroxides (for example, sodium persulfate) and dyestuffs (for example, acrylflavin). Further, so-called redox initiators of peroxides combined with reducing agents may be practically useful. It should be taken into consideration, however, that some initiators may increase a decomposition rate in the presence of hydrogen chloride, depending on the polymerizing conditions. A temperature for polymerization may be below 60°C, preferably below 45°C. Exposure of the monomer or polymer solution to a high temperature for a long time may cause the agglutination on heating rolls in the spinning step and/or in the stabilization step. In this regard, in the polymerization of a batch type in which necessary amounts of the solvent, the monomer(s) and the initiator are charged at a time into a polymerizer, the temperature is suddenly increased due to heat of polymerization at a starting time when the monomer content is high, and simultaneously the viscosity is also increased. For this reason, the batch type polymerization is not preferable due to difficulty of controlling the temperature. On the contrary, the polymerization of a continuous type in which the monomer(s) and the initiator, if used, are continuously supplied into the polymerizer under stirring and the resulting polymer solution is continuously removed therefrom, is suitable for keeping the monomer content in the polymerizer at a constant low level and for controlling the reaction temperature. In the latter case, a helical agitator may be suitably employed for achieving substantially complete mixing in the vessel. The viscosity and the polymer content of the resulting polymer solution, as well as the molecular weight of the polymer may be controlled by the polymerization temperature, the initiator concentration and the monomer content. If desired, copper ion may be added to reduce the viscosity of the polymer solution and the molecular weight of the polymer.

The properties as described hereinabove (the viscosity of the polymer solution, the polymer content and the molecular weight of the polymer) are related to each other, but preferably the viscosity is in the range of 10 to 1000 Pa · s (100 to 10,000 poise) at 45°C while the molecular weight is in the range of 60,000 to 600,000 according to the Staudinger's viscosity equation. When the viscosity is kept constant, the polymer content is preferably decreased with the high molecular weight of the polymer in order to obtain high strength of the filament. The resulting polymer solution is fed to the spinning step, if necessary after removal of unreacted monomer(s), filtration and defoaming.

The polymeric solution introduced into the spinning step after polymerization is preferably kept at a temperature not higher than 60°C, preferably not higher than 45°C, in order to prevent agglutination. During the spinning step the polymeric solution is preferably generally heated to decrease an apparent viscosity but should be kept at not higher than 60°C, preferably not higher than 45°C. The polymeric solution is extruded through a nozzle preferably having holes of 50—200 μm into a coagulating bath for forming filaments. In this case, the polymeric solution may be extruded directly into the coagulating bath but may be extruded through a suitable air gap into the bath. For the coagulating bath, a zinc chloride aqueous solution of a low temperature and a low concentration is used. A minor amount of decomposed products of the polymerization initiator or other salts may be present in the bath. A preferred concentration of zinc chloride is in the range of 10 to 40 wt.%. A temperature of the aqueous solution is preferably in the range of −10 to +20°C. The lower is the temperature, the higher concentration may be utilized and the more dense filaments may be achieved, but too low temperature causes an increased energy loss and a difficult operation. The higher temperature with the higher concentration causes ununiformity of the filaments in the sectional direction and a rough structure.

The filaments leaving the coagulating bath are optionally cold-stretched in a diluted zinc chloride aqueous solution or in water, rinsed in water, treated in a hot water of 60—100°C dried and hot-stretched in the conventional manner. The treatment with hot water prevents the filaments from being agglutinated to the adjacent filaments upon contact with rollers of high temperature in the drying and hot stretching procedures. Too high temperature may generate voids in the filaments and should be avoided. The filaments may be stretched, if desired, during the hot water treatment. Preferably, between the hot water treatment and the drying procedure the filaments are preferably imparted with an oily agent for preventing static build-up and agglutination. For preventing the static build-up the oily agent selected from phosphate esters, higher alcohols and polyalkylene oxides is preferred while a silicone type agent is preferred for preventing the agglutination. If desired, the oily agent may be additionally imparted after the hot-stretching procedure. After the hot-stretching procedure, the filaments may be subjected to a so-called relaxing (or heating) treatment under a low or no tension to increase stretchability of the filaments and improve operability. Then, the acrylonitrile filaments thus produced are subjected to the stabilization and carbonization steps to form the carbon fibers.

The stabilization step is preferably carried out for its initial stage at a temperature of 180 to 250°C for not less than 5 minutes. An initial exposure to a higher temperature may cause the agglutination and therefore should be avoided.

The invention will be described hereinbelow for better understanding with reference to non-limiting examples, in which percentages are by weight unless otherwise indicated.

Example 1

As an apparatus for polymerization, two polymerizers each equipped with a jacket for hot water and an agitator having a helical vane were connected in series, and thereto were attached five pumps for feeding a monomer solution and two types polymerization initiator solutions to one of the polymerizers and for feeding two types of polymerization initiator solutions to the other polymerizer. The monomer solution and the initiator solutions were introduced continuously while the corresponding amount of the resulting polymeric solution was withdrawn therefrom. As a solvent there was used a 60% aqueous solution of commercially available zinc chloride (containing 1.2% of basic salts). As the monomer, there was used a mixture of 95% acrylonitrile, 4% methacrylate and 1% itaconic acid. As the polymerization initiators there were used sodium persulfate and sodium bisulfite in combination. A concentration of the monomer, amounts of the initiators and an amount of cuprous chloride were adjusted so as to form the polymeric solution having a concentration of 7% and a viscosity at 40°C of 40 Pa · s (400 poise). Concentrated hydrogen chloride was used in an amount of 0.1 wt.% excess over an equivalent amount for the basic salts (1.2%) contained in the zinc chloride solvent. Polymerization was carried out at 40°C to form the polymeric solution, which was then subjected to a defoaming procedure and to filtration. Thereafter, the solution was extruded through a nozzle having 3000 holes each of 100 μm diameter into a coagulating bath of 25% zinc chloride aqueous solution at 5°C to form filaments, which in turn were rinsed in a water bath to remove the zinc chloride aqueous solution and passed through a hot water bath of 80°C. Then, the filaments were imparted with an oily agent of dimethylpolysiloxane type and passed through a hot air of 120°C and a hot roll of 150°C for drying. Thereafter, the filaments were hot-stretched in a saturated steam of $1.96 \times 10^7$ N m$^{-2}$ (2 kg/mm$^2$) and re-imparted with the oily agent of the same type, and then fallen into a receptacle. A total draft (a falling rate/a passing rate through holes) was 30. The filaments in the receptacle was treated at a relative humidity of 95% at about 100°C and then passed through a stabilizing furnace having a temperature gradient from an inlet of 230°C to an outlet of 280°C in a hot air over a period of 30 minutes

4

under a tension of about 500 g. Before and during the stabilization step, no agglutination was observed in the filaments. The stabilized filaments were then carbonized in a furnace of 1300°C in a nitrogen atmosphere. The resulting carbon fibers had very high strength of $527 \times 10^7$ Pa (538 kg/mm$^2$), as determined by a resin impregnating strand test according to JIS-R-7601.

Example 2

The procedures were similar to those in Example 1, except for differences as indicated in Table 1 below. The results obtained are also shown in Table 1.

TABLE 1

| | HCl concentration | Temp. for polymerization (°C) | Temp. of nozzle (°C) | Temp. of hot water bath (°C) | Agglutination of filaments | Agglutination of stabilized filaments | Strength of carbon fibers Pa (kg/mm$^2$) |
|---|---|---|---|---|---|---|---|
| Ex. 1 | 0.1% | 40 | 40 | 80 | No | No | $527 \times 10^7$ (538) |
| Ex. 2 | 0.3% | 40 | 40 | 95 | No | No | $541 \times 10^7$ (552) |

It will be appreciated from the results in Table 1, that occurrence of the filamentous agglutination in the spinning and stabilization procedures could be positively avoided by the presence of hydrogen chloride and that the presence of the hydrogen chloride could impart the carbon fibers with very high strength of more than $490 \times 10^7$ Pa (500 kg/mm$^2$).

Example 3

Polymerization was carried out similarly to Example 2, except that 100% acrylonitrile was used as the monomer in a concentration of 6 wt.%. The total draft in the spinning step was 15. A higher draft could form larger amount of filament chips but not cause any agglutination. A passing time through the stabilizing furnace was increased to 45 minutes but did not cause agglutination of the stabilized filaments. The resulting carbon fibers had the strength of $476 \times 10^7$ Pa (486 kg/mm$^2$).

In accordance with the process of the invention, agglutination of the filaments may be prevented in the spinning and stabilization steps, thereby to form the smooth and uniform filaments and hence the carbon fibers which may be readily separated from each other for a sizing procedure. The strength more than $392 \times 10^7$ Pa (400 kg/mm$^2$), in some cases more than $490 \times 10^7$ Pa (500 kg/mm$^2$) may be readily achieved.

Further, heating to a temperature higher than 2000°C in an inert atmosphere may form graphite fibers of high quality.

**Claim**

A process for preparing acrylonitrile-based filaments for carbon fibers free of agglutination, which comprises homopolymerizing acrylonitrile or copolymerizing acrylonitrile with other vinyl monomers in an aqueous zinc chloride solution to form a polymeric solution which in turn is spun in a coagulating bath to form the filaments, characterised in that the aqueous solution has a concentration of more than 50 and up to 70% by weight of zinc chloride and contains 0.01 to 5% by weight of hydrogen chloride and in that the filaments are obtained by spinning the polymeric solution in a coagulating bath of a dilute zinc chloride aqueous solution, rinsing the filaments in water and treating the filaments with hot water having a temperature of 60—100°C.

**Patentanspruch**

Verfahren zur Herstellung von nicht aneinander klebenden Acrylnitrilfasern für Kohlenstoffasern, welches die Homopolymerisation von Acrylnitril oder die Kopolymerisation von Acrylnitril mit anderen Vinyl-Monomeren in einer wässrigen Zinchlorid-Lösung zur Bildung einer Polymerlösung, welche wiederum in einem Koagulationsbad zur Bildung der Fasern gesponnen wird, umfaßt, dadurch gekennzeichnet, daß die wässrige Lösung eine Konzentration an Zinkchlorid von 50—70 Gew.-% aufweist und 0,01—5 Gew.-% Chlorwasserstoff enthält und daß die Fasern erhalten werden, indem die Polymerlösung in einem Koagulationsbad aus einer verdünnten wässrigen Zinkchlorid-lösung gesponnen wird, indem die gesponnenen Fasern in Wasser gespült werden und indem die Fasern mit Wasser behandelt werden, welches eine Temperatur zwischen 60 und 100°C besitzt.

# 0 153 809

**Revendication**

Procédé pour préparer des filaments à base d'acrylonitrile, exempts de toute agglutination, pour fabriquer des fibres de carbone, incluant une homopolymérisation de d'acrylonitrile ou une copolymérisation de l'acrylonitrile avec d'autres monomères de vinyle dans une solution aqueous de chlorure de zinc pour former une solution polymérique, qu'on soumet à son tour à un filage dans un bai de coagulation pour former les filaments, caractérisé en ce que la solution aqueuse possède une teneur supérieure à 50 et allant jusqu'à 70% en poids de chlorure de zinc et contient 0,01 à 5% en poids d'acide chlorhydrique, et en ce que les filaments sont obtenus par filage de la solution polymérique dans un bain de coagulation d'une solution aqueuse de chlorure de zinc dilué, rinçage des filaments dans de l'eau et traitement des filaments avec de l'eau chaude possédant une température de 60—100°C.